# EUROPÄISCHE PATENTSCHRIFT

(11) **EP 3 277 767 B1**
(45) Veröffentlichungstag und Bekanntmachung des Hinweises auf die Patenterteilung: **17.09.2025**
(21) Anmeldenummer: 16714317.1
(22) Anmeldetag: 23.03.2016
(51) Int. Cl.: C08J 5/18, C09J 7/22, C09J 7/24, C09J 7/38

(54) **ABZUGSSICHERE SICHERHEITSFOLIE MIT HOHER TRANSPARENZ UND OHNE SOLLBRUCHSTELLEN**
TAMPER EVIDENT SAFETY FILM WITH HIGH TRANSPARENCY AND WITHOUT BUILT-IN BREAK POINTS
FEUILLE DE SECURITE INDECOLLABLE, A HAUTE TRANSPARENCE ET SANS POINTS DE RUPTURE

(30) Priorität: 31.03.2015 EP 15161918
(43) Veröffentlichungstag der Anmeldung: 07.02.2018
(73) Patentinhaber: POLYVANTIS GmbH, 64331 Weiterstadt (DE)
(72) Erfinder: SEYOUM, Ghirmay, 63329 Egelsbach (DE); RODRIGUES, Haroldo, 60314 Frankfurt (DE); DICKHAUT, Günther, 68305 Mannheim (DE); PACHMANN, Jürgen, 68642 Bürstadt (DE); BIRTH, Detlef, 64807 Dieburg (DE)
(74) Vertreter: Ellwanger, Arndt
(86) Internationale Anmeldenummer: PCT/EP2016/056326
(87) Internationale Veröffentlichungsnummer: WO 2016/156137

(56) Entgegenhaltungen:
- WO-A1-2010/117771
- DE-A1- 102010 062 900
- JP-A- 2014 043 504
- US-B1- 6 280 835
- ULRIKE WENZEL: "Charakterisierung eines ultrahochmolekularen Polymethacrylats mit fl?ssigkristalliner Seitengruppe in verd?nnter L?sung", vol. D83/2000, 5 July 2000 (2000-07-05), pages 78pp, XP007912815, Retrieved from the Internet <URL:http://opus.kobv.de/tuberlin/volltexte/2000/171/pdf/wenzel_ulrike.pdf> [retrieved on 20100426]

## Beschreibung

### Gebiet der Erfindung

Die vorliegende Erfindung betrifft abzugssichere Sicherheitsfolien aus einem Poly(meth)acrylat, insbesondere aus einem Polymethylmethacrylat, welches maximal 10 Gew% oder keine Schlagzähmodifizierer enthält. Diese Folien können in hoher Transparenz, als transluzente Folie oder sogar als Weißfolie vorliegen, können gut bedruckt werden und ohne Sollbruchstellen appliziert werden. Die abzugssicheren Sicherheitsfolien können somit insbesondere in Dokumenten, wie zum Beispiel Chipkarten oder Reisepässen, in Sicherheitsetiketten, wie zum Beispiel Vignetten oder zur Diebstalsicherung von Produkten, oder als Preisschilder Verwendung finden. Diese Sicherheitsetiketten zeichnen sich zudem durch eine gute Witterungsbeständigkeit und insbesondere durch eine besonders gute UV-Stabilität aus.

Insbesondere betrifft die vorliegende Erfindung die Verwendung dieser Sicherheitsetiketten, die eine Dicke von höchstens 2 mm aufweisen, mindestens 80 Gew% Polymethylmethacrylat und maximal 10 Gew% Schlagzähmodifizierungspartikel oder keine Schlagzähmodifizierungspartikel enthalten.

### Stand der Technik

Sicherheitsetiketten, die nicht zerstörungsfrei abziehbar sind, werden in diversen Anwendungsgebieten eingesetzt. Zu diesen Anwendungsgebieten gehören die Sicherung von Dokumenten, wie zum Beispiel von Chipkarten oder Reisepässen, Sicherheitsetiketten, wie zum Beispiel Vignetten, Etiketten zur Diebstalsicherung von Produkten oder Preisschilder. Eine typische Chipkarte nach Stand der Technik besteht zum Beispiel aus bis zu 12 Einzelteilen, die in bis zu 30 Arbeitsschritten zusammengefügt und programmiert werden. Dabei werden neben der Trägerschicht und der Schicht, die den Magnetstreifen aufweist für jede Funktion gesonderte Lagen aufgetragen. So werden eine oder mehrere Schichten allein benötigt, um einen ausreichenden Witterungsschutz, Schutz gegen Verkratzen und UV-Schutz zu realisieren. In einer weiteren Schicht wird zum Erhalt der Fälschungssicherheit eine nicht zerstörungsfrei entfernbare Sicherheitsschicht aufgebracht. Oft ist auch der Druck auf einer gesonderten Schicht zu finden, da die anderen aufgeführten Schichten nur schlecht oder mit einem nur mangelhaften Druckbild bedruckbar sind.

Nach Stand der Technik enthalten Etiketten, wie sie zum Beispiel als Vignetten zum Verkleben auf Glasscheiben aufgebracht werden, in der Regel eine optional bedruckbare Trägerschicht aus PET, PVC, PE oder BOPP. Auf diese Schicht ist auf der einen Oberseite eine zweite Schicht, die unter anderem zur Witterungsstabilisierung benötigt wird, mittels eines zwischenliegenden Haftklebstoffs auflaminiert. Diese zweite Schicht besteht nach Stand der Technik in der Regel aus Polycarbonat, PET oder PVC. Da solche Schichten allein zur besseren Verarbeitbarkeit über eine limitierte Sprödigkeit verfügen dürfen, müssen die Etiketten zusätzlich, z.B. mittels Schnitten, strukturiert werden, um eine zerstörungsfreie Entfernbarkeit zu unterbinden.

Weiterhin gibt es auch reine PVC-Folien, insbesondere als Weißfolien. Diese haben zwar eine gewünscht geringe Einreißfestigkeit. Es kann jedoch festgestellt werden, dass nach dem Einreißen der Weg zum Komplettbruch relativ lang ist. Das bedeutet, dass eine zum Beispiel beim Anheben des Sicherheitsetiketts minimal eingerissene Folie unter Umständen doch sehr vorsichtig vom Substrat gelöst werden kann. Wünschenswerter wäre hier ein schneller eintretender Komplettbruch.

US 6,280,835 B1 offenbart eine thermoplastische spröde Acrylharzfolie, die aus einer oder zwei Schichten besteht und in der kein Vinylchloridharz verwendet wird. Die Acrylharzfolie wird aus einer Harzzusammensetzung hergestellt, die 100 Gew.-Teile thermoplastisches Acrylharz mit einer Bruchdehnung von 10 bis 180 %, und 10 bis 70 Gew.-Teile mindestens eines Füllstofftyps, ausgewählt aus der Gruppe bestehend aus Quarzfüllstoff, Aluminiumhydroxid, Bariumsulfat und Calciumcarbonat, umfasst.

WO 2010/117771 A1 offenbart ein Etikett, das (a) eine Folie mit einer ersten Oberfläche und einer zweiten Oberfläche und umfassend eine erste Folienschicht; und (b) eine Klebstoffschicht mit einer ersten Oberfläche und einer zweiten Oberfläche, die einen Klebstoff umfasst, wobei die erste Oberfläche der Klebstoffschicht mit der zweiten Oberfläche der Folie klebend verbunden ist; (c) wobei die erste Folienschicht mindestens ein nicht orientiertes thermoplastisches Polymer umfasst, wobei das thermoplastische Polymer eine Glasübergangstemperatur im Bereich von etwa 40°C bis etwa 190°C aufweist, und (i) einen Zugmodul (ASTM D882) in der Maschinenrichtung nach dem Erhitzen, der geringer ist als der Zugmodul in der Maschinenrichtung in Umgebungsluft, oder (ii) eine flächenmäßige Schrumpfung (ASTM D1204) von mindestens etwa 5,3 % nach Eintauchen in Wasser bei einer Temperatur von etwa 80°C für mindestens etwa 3 Minuten oder eine Kombination von c(i) und c(ii), umfasst.

### Aufgabe

In Anbetracht des Standes der Technik war es nun Aufgabe der vorliegenden Erfindung, ein Verfahren zur Herstellung von abzugssicheren Sicherheitsfolien, die ohne Strukturierung mit hoher Transparenz bzw. sehr gutem Druckbild realisierbar sind, zur Verfügung zu stellen.

Insbesondere war es in Hinblick auf den Stand der Technik Aufgabe hier, eine Folie für Sicherheitsetiketten zur Verfügung zu stellen, die sowohl über eine geringe Einreißfestigkeit, als auch über einen nur kurzen Weg des Risses zum Komplettbruch der Folie verfügt.

Weiterhin war es dabei insbesondere Aufgabe der vorliegenden Erfindung solche Sicherheitsfolien zur Verfügung zu stellen, die ohne zu reißen, hergestellt und verarbeitet werden können.

Eine weitere Aufgabe der Erfindung bestand darin, dass die Sicherheitsfolien auch bei längerem Gebrauch oder nach Bewitterung besonders gute Gelbwerte und eine insgesamt sehr hohe Witterungs- und UV-Beständigkeit aufweisen.

Weiterhin war es Aufgabe der vorliegenden Erfindung, Sicherheitsfolien, die bei der Herstellung von Chipkarten dazu beitragen, den Herstellungsprozess zu vereinfachen.

Weitere Aufgaben, die dieser Erfindung zugrunde liegen, können sich aus der Beschreibung, dem Stand der Technik sowie den Beispielen ergeben, ohne an dieser Stelle explizit genannt zu werden.

### Lösung

Gelöst werden die der Erfindung zugrunde liegenden Aufgaben durch die neuartige Verwendung von Polymethacrylatfolien als Sicherheitsetiketten. Diese Polymethacrylatfolien sind dabei dadurch gekennzeichnet, dass die Folie mittels eines Extrusionsverfahren hergestellt wurde;
eine Dicke zwischen 20 und 75 µm und eine Bruchdehnung zwischen 2,0% und 15% gem. ASTM D1004 aufweist;
zu 90 bis 100 Gew% aus einem Polymethacrylat besteht, welches zu 90 bis 100 Gew% aus MMA und zu 0 bis 10 Gew% aus Acrylaten mit einem Alkylrest, aufweisend 1 bis 4 Kohlenstoffatomen besteht; und
dass die Folie maximal 10 Gew% oder keine Schlagzähmodifizierer enthält.

Die Bruchdehnung wird erfindungsgemäß gemäß ISO 525 bestimmt, kann aber auch nach ASTM D1004 ermittelt werden.

In der Regel haben handelsübliche PMMA-Folien, wie sie beispielsweise als Witterungsschutzfolien verwendet werden, eine Bruchdehnung zwischen 50% und 100%. Für den Fachmann ist es überraschend, dass Folien mit einer deutlich geringeren Bruchdehnung als Sicherheitsetiketten ohne besondere Perforierung verwendet werden können. Die Bruchdehnung kann der Fachmann mit wenig Aufwand im erfindungsgemäßen Bereich einstellen. Dazu gibt es verschiedene Einflussfaktoren, durch deren Variation er die Bruchdehnung in die gewünschte Richtung beeinflussen kann. So sinkt die Bruchdehnung zum einen durch die Erhöhung der Glasübergangstemperatur, welche er durch die genaue Monomerzusammensetzung beeinflussen kann. Insbesondere ein geringer Anteil oder das Fehlen von Acrylaten oder Methacrylaten mit längeren Alkylresten von mehr als einem Kohlenstoffatom erhöhen die Glasübergangstemperatur.

Ein zweiter Einflussfaktor stellt die Art und insbesondere die Menge von Schlagzähmodifikatoren dar. Insbesondere eine steigende Konzentration der Schlagzähmodifikatoren erhöht auch die Bruchdehnung, so dass eher geringe Mengen oder der gänzliche Verzicht auf Schlagzähmodifikatoren zu einer erfindungsgemäßen Bruchdehnung beiträgt.

Im Falle von eingefärbten, insbesondere weißen Folien stellen die Pigmente den dritten Einflussfaktor dar. Bevorzugt werden die Folien neben transparenten Ausführungsformen weiß eingefärbt verwendet. Dazu wird beispielsweise Titandioxid in Konzentrationen von bis zu 40 Gew% dem Matrixmaterial der Folie zugemischt. Umso höher die Konzentration an Titandioxid ist, umso geringer ist die Bruchdehnung, so dass dem Fachmann für weiße Folien ein zusätzlicher Einflussfaktor zur Verfügung steht.

Dabei sind diese Polymethacrylatfolien dadurch gekennzeichnet, dass die Folie zu 90 bis 100 Gew% aus einem Polymethacrylat besteht. Das Poly(meth)acrylat setzt sich aus 90 bis 100 Gew% MMA und aus 0 bis 10 Gew% aus Acrylaten mit einem Alkylrest, aufweisend 1 bis 4 Kohlenstoffatomen, zusammen.

Dabei weist die Folie eine Dicke zwischen 20 und 75 µm auf. Insbesondere zeichnet sich die Folie - insbesondere im Gegensatz zum Stand der Technik - dadurch aus, dass die Folie keine oder maximal 10 Gew%, bevorzugt maximal 2 Gew% Schlagzähmodifizierungsmittel enthält. Unter Schlagzähmodifikatoren werden erfindungsgemäß Partikel verstanden, die eine Weichphase aufweisen, mittels derer die Schlagzähigkeit von Folien oder Formmassen verbessert wird. In der Regel handelt es sich bei diesen um Gummipartikel oder um Poly(meth)acrylat-Emulsionspolymerisate. Diese Emulsionspolymerisate liegen dabei in der Regel als Kern-Schale- oder als Kern-Schale-Schale-Partikel vor, wobei der Kern oder die mittlere Schale eine Weichphase, zumeist mit einem hohen Anteil an Acrylaten, darstellt.

Die Ausführungsform einer transparenten Folie besteht bevorzugt aus 90 bis 100 Gew% aus dem Polymethacrylat. Die Ausführungsform einer weißen Sicherheitsfolie besteht bevorzugt aus 55 bis 95 Gew% Polymethacrylat und enthält bevorzugt zwischen 5 und 40 Gew%, besonders bevorzugt zwischen 20 und 35 Gew% Titandioxid.

Detaillierte Ausgestaltung einer bevorzugt verwendeten Anlage zur Herstellung der erfindungsgemäß verwendeten Polymethacrylatfolien

Die erfindungsgemäß verwendete Polymethacrylatfolie wird mittels eines Extrusionsverfahren hergestellt. Dazu wird insbesondere eine Anlage verwendet, die mindestens folgende Komponenten aufweist:
ein Extruder,
eine Schmelzepumpe,
eine optionale Schmelzefiltration,
ein optionales statisches Mischelement,
   eine Flachfoliendüse,
   ein Glättwerk oder eine Chill-Roll-Walze
   und einen Wickler.

Die erfindungsgemäß verwendeten Polymethacrylatfolien haben darüber hinaus eine besonders hohe Beständigkeit gegen Witterungseinflüsse, insbesondere gegen UV-Bestrahlung. Um diese zusätzlich zu steigern, können dem Polymethacrylat UV-Absorber und/oder UV- Stabilisatoren zugesetzt sein.

Auch lassen sich die erfindungsgemäß verwendeten Polymethacrylatfolien besonders einfach und kostengünstig herstellen. Dies gilt insbesondere für das aufgezeigte, bevorzugte Verfahren zu deren Herstellung. Auch bei der Extrusion der Polymethacrylatfolien ist die Sprödigkeit trotz fehlender Schlagzähmodifikatoren so gering, dass das Risiko eines Bahnabrisses weiter minimiert ist und die Folie bei hohen Extrusionsgeschwindigkeit herzustellen ist. Die Polymethacrylatfolie lässt sich somit mit vorhandenen Extrusionsanlagen und nach bekannten Methoden, bevorzugt nach weiter oben dargestellter Ausgestaltung der Extrusionsanlage, herstellen.

Weiterhin haben die erfindungsgemäß verwendeten Polymethacrylatfolien den Vorteil, dass sie sich leicht auf gewünschte Formate zuschneiden oder stanzen lassen. Besonders geeignete Methoden zum Zuschneiden der Polymethacrylatfolie sind das Laserschneiden oder das Laserstanzen.

Das Extrudieren von Polymeren zu Folien ist weithin bekannt und beispielsweise in Kunststoffextrusionstechnik II, Hanser Verlag, 1986, S. 125 ff. beschrieben. Hier sind auch weitere Ausführungsformen der einzelnen Anlagenkomponenten ausgeführt.

Beim erfindungsgemäßen Verfahren wird eine heiße Schmelze aus der Düse des Extruders auf einen Spalt zwischen zwei Glättwalzen oder auf eine Chill-Roll-Walze extrudiert. Die optimale Temperatur der Schmelze ist beispielsweise von der Zusammensetzung der Mischung abhängig und kann daher in weiten Bereichen schwanken. Bevorzugte Temperaturen der PMMA-Formmasse bis zum Düseneintritt liegen im Bereich von 150 bis 300 °C, besonders bevorzugt im Bereich von 180 bis 270 °C und ganz besonders bevorzugt im Bereich von 200 bis 260 °C. Die Temperatur der Glättwalzen ist vorzugsweise kleiner oder gleich 150 °C, bevorzugt zwischen 60 °C und 140 °C.

In einer Ausführungsform wird die Temperatur der Düse vorzugsweise höher als die Temperatur der Mischung vor dem Düseneintritt gewählt. Bevorzugt wird die Düsentemperatur um 10 °C, besonders bevorzugt um 20 °C und ganz besonders bevorzugt um 30 °C höher eingestellt als die Temperatur der Mischung vor dem Düseneintritt. Dementsprechend liegen bevorzugte Temperaturen der Düse im Bereich von 160 °C bis 330 °C, besonders bevorzugt 190 °C bis 300 °C.

Das verwendete Glättwerk besteht beispielsweise aus zwei oder drei Glättwalzen. Glättwalzen sind in der Fachwelt weithin bekannt, wobei zum Erhalt eines hohen Glanzes polierte Walzen verwendet werden. In dem erfindungsgemäßen Verfahren können aber auch andere Walzen als Glättwalze verwendet werden. Dabei kann es sich beispielsweise um Mattwalzen handeln. Durch den Spalt zwischen den beiden ersten Glättwalzen wird ein Film gebildet, der durch die gleichzeitige Abkühlung zu einer Folie wird. In Fig.1 ist eine Ausführungsform mit drei Glättwalzen schematisch abgebildet.

Die alternativ verwendeten Chill-Roll-Walzen sind dem Fachmann gleichsam bekannt. Hier wird der Schmelzefilm auf eine einzelne, gekühlte Walze abgelegt und von dieser weitertransportiert. Aufgrund der einfacheren Installation und Betrieb sind Chill-Roll-Walzen gegenüber Glättwerken zur Herstellung der erfindungsgemäßen Polymethacrylatfolien bevorzugt.

Eine besonders gute Oberflächenqualität der Polymethacrylatfolien können dadurch gewährleistet werden, dass Düse und Walze Chromoberflächen aufweisen, und ganz besonders dadurch, dass diese Chromoberflächen eine Rauhigkeit Ra (gemäß DIN 4768) kleiner 0,10 µm, bevorzugt kleiner 0,08 µm aufweisen.

Damit die entstehende Folie weitgehend frei von Verunreinigungen ist, wird vor dem Eintritt der Schmelze in die Düse optional ein Filter angeordnet. Die Maschenweite des Filters richtet sich im Allgemeinen nach den eingesetzten Ausgangsstoffen und kann dementsprechend in weiten Bereichen variieren. Im Allgemeinen liegen sie im Bereich von 300 µm bis 20 µm. Es können auch Filter mit mehreren Sieben unterschiedlicher Maschenweite vor dem Düseneintritt angeordnet werden. Diese Filter sind kommerziell erhältlich. Um Folien mit hoher Güte zu erhalten, ist es des Weiteren vorteilhaft besonders reine Rohstoffe einzusetzen.

Optional kann darüber hinaus vor der Flachfoliendüse ein statisches Mischelement eingebaut sein. Über dieses können Komponenten wie Pigmente, Stabilisatoren oder Additive in die Polymerschmelze gemischt werden oder es können bis zu 5 Gew% eines zweiten Polymers, zum Beispiel in Form einer Schmelze aus einem zweiten Extruder zu dem PMMA gemischt werden.

Der Druck mit dem die geschmolzene Mischung in die Düse gepresst wird, kann beispielsweise über die Geschwindigkeit der Schnecke gesteuert werden. Der Druck liegt im Allgemeinen in einem Bereich von 40 bis 150 bar, ohne dass das erfindungsgemäße Verfahren hierdurch beschränkt wird. Die Geschwindigkeit, mit der die Folien erfindungsgemäß erhalten werden können, ist dementsprechend im Allgemeinen größer als 5 m/min, insbesondere größer als 10 m/min.

Zur Sicherstellung einer gleichmäßigen Schmelzeförderung kann zusätzlich eine Schmelzepumpe vor der Flächenfoliendüse eingebaut sein.

### Erfindungsgemäß verwendete Matrixmaterialien

Zur Herstellung der erfindungsgemäß verwendeten Polymethacrylatfolien werden Formmassen, deren thermoplastischer Hauptbestandteil zu mindestens 90 Gew% und besonders bevorzugt mindestens 95 Gew% aus Polymethylmethacrylat (im Weiteren kurz PMMA) bestehen, eingesetzt. Diese Polymere werden im Allgemeinen durch radikalische Polymerisation von Mischungen erhalten, die Methylmethacrylat enthalten. Im Allgemeinen enthalten diese Mischungen mindestens 90 Gew% und besonders bevorzugt mindestens 95 Gew%, bezogen auf das Gewicht der Monomere, Methylmethacrylat. Eine besonders hohe Qualität zeigen insbesondere Sicherheitsetiketten, die im Wesentlichen aus Polymethylmethacrylat bestehen.

Daneben können diese Mischungen weitere (Meth)acrylate enthalten, die mit Methylmethacrylat copolymerisierbar sind. Der Ausdruck (Meth)acrylate umfasst Methacrylate und Acrylate sowie Mischungen aus beiden.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind. Hierzu gehören unter anderem 1-Alkene, Acrylnitril, Vinylacetat, Styrol, substituierte Styrole oder Vinylether. Alle dargelegten Monomere werden bevorzugt in einer hohen Reinheit eingesetzt.

Das Gewichtsmittel des Molekulargewichts M_{w} der Homo- und/oder Copolymere kann in weiten Bereichen schwanken, wobei das Molekulargewicht üblicherweise auf den Anwendungszweck und die Verarbeitungsweise der Formmasse abgestimmt wird. Im Allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll. Das Gewichtsmittel des Molekulargewichts wird mittel Gelpermeationschromatographie (GPC) gegen Polystyrolstandards bestimmt.

Zur Herstellung des erfindungsgemäß verwendeten Polymethacrylatfolien können verschiedene Poly(meth)acrylate als Matrixmaterial eingesetzt werden, die sich beispielsweise im Molekulargewicht oder in der Monomerzusammensetzung unterscheiden. Derartig besonders bevorzugte Formmassen sind unter dem Handelsnamen PLEXIGLAS^{®} von der Fa. Evonik Industries GmbH kommerziell erhältlich.

Die Formmassen können übliche Zusatzstoffe enthalten. Hierzu gehören unter anderem Antistatika, Antioxidantien, Lichtstabilisatoren und organische Phosphorverbindungen, Verwitterungsschutzmittel und Weichmacher. Die Menge an Zusatzstoffen ist jedoch auf den Anwendungszweck beschränkt. Vorzugsweise umfassen die erfindungsgemäßen Sicherheitsfolien höchstens 10 Gew% und besonders bevorzugt höchstens 2 Gew% Additive, wobei Sicherheitsfolien, die im Wesentlichen keine Additive umfassen überraschend eine außergewöhnliche Leistungsfähigkeit zeigen.

### Die Sicherheitsetiketten

Neben der beschriebenen Verwendung sind auch die applikationsfähigen Sicherheitsfolien selbst ein Teil der vorliegenden Erfindung. diese zeichnen sich dadurch aus, dass die Folie eine Dicke zwischen 20 und 75 µm und eine Bruchdehnung zwischen 2,0% und 15%, bevorzugt zwischen 4% und 14% aufweist, und dass die Sicherheitsfolie vor der Applikation mindestens folgende Schichten in angegebener Reihenfolge aufweist:
a) eine Polymethacrylatfolie, mittels eines Extrusionsverfahren hergestellt; die zu 90 bis 100 Gew% aus einem Polymethacrylat besteht, welches zu 90 bis 100 Gew% aus MMA und zu 0 bis 10 Gew% aus Acrylaten mit einem Alkylrest, aufweisend 1 bis 4 Kohlenstoffatomen, besteht, die zusätzlich dadurch gekennzeichnet ist, dass die Folie maximal 10 Gew% Schlagzähmodifizierer enthält, und dass sie auf mindestens einer Seite eine Bedruckung aufweist,
b) einen Haftklebstoff,
c) eine Trennbeschichtung und
d) eine Trägerschicht.

Bevorzugt weist die Schicht a) eine Dicke ohne Bedruckung zwischen 20 und 100 µm, bevorzugt zwischen 30 und 75 µm auf. Die Bedruckung wiederum hat in der Regel eine Dicke zwischen 1,5 und 3 µm, während die Schicht b) eine Dicke zwischen 20 und 30 µm, die Schicht c) eine Dicke zwischen 0,5 und 1,2 µm und die Schicht d) eine Dicke zwischen 20 und 70 µm aufweisen.

Die angegebenen Dicken beziehen sich hierbei auf den Mittelwert der kleinsten Ausdehnung der jeweiligen Schicht senkrecht zur Applikationsfläche gemessen. Die Dicke an sich ergibt sich in der Regel aus der jeweiligen Applikationstechnologie der einzelnen Schichten. So kann die Bedruckung beispielsweise mittels Flexodruck, Digitaldruck oder sogar Siebdruck erfolgen, während der Haftklebstoff mittels einer Walze oder einem Rakel aufgetragen werden können. Für Schichten, die vor der Herstellung der Sicherheitsfolie getrennt vorliegen, wie insbesondere die Schichten a) und d), kann die Dicke der Schicht mittels eines Bügelmikrometers oder ähnlichen bekannten Vorrichtungen bestimmt werden.

Die Ausführungsform einer transparenten Folie besteht bevorzugt aus 90 bis 100 Gew% aus dem Polymethacrylat.

Die Ausdehnungen der Sicherheitsetiketten in die anderen beiden Dimensionen sind grundsätzlich frei wählbar und in der Breite durch das zur Herstellung eingesetzte Glättwerk bzw. die Extrusionsdüse limitiert. Dies bedeutet, dass die Formate nahezu frei wählbar sind.

Der Zuschnitt der Polymethacrylatfolie erfolgt bevorzugt mittels Stanzen, Schneiden, Laserschneiden oder Laserstanzen. Insbesondere bevorzugt durch Laserschneiden oder -stanzen.

In einer besonderen Ausführungsform enthält die Sicherheitsfolie keine Schlagzähmodifizierer.

Optional, jedoch nicht notwendigerweise, können die erfindungsgemäß hergestellten Polymethacrylatfolien zusätzlich mit Rillen oder Einkerbungen versehen werden, um ein zerstörungsfreies Abziehen der Etiketten zusätzlich zu unterbinden. Dies ist jedoch eigentlich nicht nötig, da sich die erfindungsgemäß als abzugssichere Sicherheitsetiketten verwendeten Polymethacrylatfolien an sich nach dem Verkleben auf einer Oberfläche nicht mehr zerstörungsfrei entfernen lassen.

Bevorzugt finden die Sicherheitsfolien Verwendung zur Herstellung von Chipkarten, Dokumenten, Sicherheitsetiketten, anderen Etiketten oder Preisschildern. Ein anschauliches Beispiel zur Verwendung sind beispielsweise Mautplaketten, die auf der Innenseite der Fahrzeugscheibe angebracht werden.

### Beispiele

### Beispiel 1

Eine Formasse, zusammengesetzt aus 98 Gew% eines Polymethylmethacrylats und 2 Gew% Schlagzähmodifizierungsmittels, in Form eines Kern-Schale-Partikels, wird unter folgenden Bedingungen zu einer Foliendicke von 50 µm extrudiert:
Schneckentemperatur im Extruder: 240 bis 270°C
Düsentemperatur: 240 bis 260°C
Temperatur der Schmelze an der Düse: 240 bis 260°C
Walzentemperatur: 50 bis 120°C

Es wird an dem Material eine Bruchdehnung von 3% gemessen:

### Beispiel 2

Wie Beispiel 1, nur dass 5 Gew % Schlagzähmodifizierer eingesetzt wurden. Es wurde eine Bruchdehnung von 4,5% gemessen.

### Vergleichsbeispiel 3

### Zusammensetzung: 3

Wie Beispiel 1, nur dass 30 Gew % Schlagzähmodifizierer und 20 Gew% Titandioxid eingesetzt wurden. Es wurde eine Bruchdehnung von 8% gemessen.

## Patentansprüche

1. Verwendung von Polymethacrylatfolien als Sicherheitsetiketten, **dadurch gekennzeichnet, dass**
die Folie mittels eines Extrusionsverfahren hergestellt wurde;
eine Dicke zwischen 20 und 75 µm und eine Bruchdehnung zwischen 2,0% und 15% gem. ASTM D1004 aufweist;
zu 90 bis 100 Gew% aus einem Polymethacrylat besteht, welches zu 90 bis 100 Gew% aus MMA und zu 0 bis 10 Gew% aus Acrylaten mit einem Alkylrest, aufweisend 1 bis 4 Kohlenstoffatomen besteht; und
dass die Folie maximal 10 Gew% oder keine Schlagzähmodifizierer enthält.

2. Verwendung von Polymethacrylatfolien gemäß Anspruch 1, **dadurch gekennzeichnet, dass** die Polymethacrylatfolien mittels eines Verfahrens hergestellt werden, welches **dadurch gekennzeichnet, dass** es sich um ein Extrusionsverfahren handelt, und dass die verwendete Anlage mindestens aus folgenden Komponenten besteht:
ein Extruder,
eine Schmelzepumpe,
eine optionale Schmelzefiltration,
ein optionales statisches Mischelement,
eine Flachfoliendüse,
ein Glättwerk oder Chill-Roll-Walze,
und einen Wickler,
wobei die Flachfoliendüse über eine Düsenlippe mit Stellelementen zur Einstellung der Düsenlippenbreite verfügt, und die Stellelemente einen Abstand von 11 bis 15 mm zueinander aufweisen,
der Düsenkörper eine Außengeometrie aufweist, die, der Form der Glättwalzen angepasst ist,
und der Abstand von der Schmelzeaustrittskante zum Glättspalt 80 mm oder kleiner ist.

3. Verwendung von Polymethacrylatfolien gemäß Anspruch 2, **dadurch gekennzeichnet, dass** die Flachfoliendüse gegenüber dem Glättwerk mittels Laser ausgerichtet wird und dass die parallele Abweichung der Düse zu den Glättwalzen, gemessen an den beiden Enden einer Düsenaußenseite eine maximale Abweichung von 3 mm aufweist.

4. Verwendung von Polymethacrylatfolien gemäß mindestens einem der Ansprüche 1 bis 3, **dadurch gekennzeichnet, dass** die Differenz zwischen der dünnsten und der dicksten Stelle der Polymethacrylatfolie maximal 5 µm beträgt.

5. Verwendung von Polymethacrylatfolien gemäß mindestens einem der Ansprüche 2 bis 4, **dadurch gekennzeichnet, dass** Düse und Walze Chromoberflächen aufweisen, und dass diese Chromoberflächen eine Rauhigkeit Ra kleiner 0,08 µm aufweisen.

6. Applikationsfähige Sicherheitsfolie, **dadurch gekennzeichnet, dass** die Sicherheitsfolie eine Dicke zwischen 20 und 75 µm und eine Bruchdehnung zwischen 2,0% und 15% gem. ASTM D1004 aufweist, und dass die Sicherheitsfolie vor der Applikation mindestens folgende Schichten in angegebener Reihenfolge aufweist:
a) eine Polymethacrylatfolie, mittels eines Extrusionsverfahren hergestellt;
zu 90 bis 100 Gew% aus einem Polymethacrylat besteht, welches zu 90 bis 100 Gew% aus MMA und zu 0 bis 10 Gew% aus Acrylaten mit einem Alkylrest, aufweisend 1 bis 4 Kohlenstoffatomen, besteht, die zusätzlich **dadurch gekennzeichnet ist, dass** die Folie maximal 10 Gew% Schlagzähmodifizierer enthält, und dass sie auf mindestens einer Seite eine Bedruckung aufweist,
b) einen Haftklebstoff,
c) eine Trennbeschichtung und
d) eine Trägerschicht.

7. Applikationsfähige Sicherheitsfolie gemäß Anspruch 6, **dadurch gekennzeichnet, dass** Schicht a) eine Dicke ohne Bedruckung zwischen 20 und 75 µm, die Bedruckung eine Dicke zwischen 1,5 und 3 µm, die Schicht b) eine Dicke zwischen 20 und 30 µm, die Schicht c) eine Dicke zwischen 0,5 und 1,2 µm und die Schicht d) eine Dicke zwischen 20 und 70 µm aufweist.

8. Applikationsfähige Sicherheitsfolie gemäß Anspruch 6 oder 7, **dadurch gekennzeichnet, dass** die Folie transparent ist und zu 90 bis 100 Gew% aus dem Polymethacrylat besteht.

9. Applikationsfähige Sicherheitsfolie gemäß mindestens einem der Ansprüche 6 bis 8, **dadurch gekennzeichnet, dass** die Folie keine Schlagzähmodifizierer enthält.

10. Verwendung der Sicherheitsfolien gemäß Anspruch 6 oder 9 zur Herstellung von Chipkarten, Dokumenten, Sicherheitsetiketten, anderen Etiketten oder Preisschildern.

## Claims

1. Use of polymethacrylate films as security labels, **characterized in that** the film was produced by means of an extrusion process;
having a thickness of between 20 and 75 µm and an elongation at break of between 2.0% and 15% according to ASTM D1004;
comprising 90 to 100 wt% of a polymethacrylate, which comprise 90 to 100 wt% of MMA and 0 to 10 wt% of acrylates with an alkyl residue having 1 to 4 carbon atoms; and containing a maximum of 10 wt% or no impact modifiers.

2. Use of polymethacrylate films according to claim 1, **characterized in that** the polymethacrylate films are produced by means of a process which is **characterized in that** it is an extrusion process and that the equipment used consists of at least the following components:
an extruder,
a melt pump,
optional melt filtration facility,
an optional static mixing element,
a flat film die,
a polishing stack or chill roll,
and a winder,
the flat film die possessing a die lip having actuating elements for adjusting the die lip width, and the actuating elements having a distance of 11 to 15 mm from one another, the body having an external geometry adapted to the shape of the polishing rolls, the distance from the melt exit edge to the polishing nip being 80 mm or less.

3. Use of polymethacrylate films according to claim 2, **characterized in that** the flat film die is oriented relative to the polishing stack by means of laser and that the parallel deviation of the die relative to the smoothing rolls, measured at the two ends of one outer side of the die, exhibits a maximum deviation of 3 mm.

4. Use of polymethacrylate films according to at least one of claims 1 to 3, **characterized in that** the difference between the thinnest and thickest points of the polymethacrylate film is at most 5 µm.

5. Use of polymethacrylate films according to at least one of claims 2 to 4, **characterized in that** the die and roll have chrome surfaces and **in that** these chrome surfaces have a roughness Ra of less than 0.08 µm.

6. An application-capable security film, **characterized in that** the security film has a thickness of between 20 and 75 µm and an elongation at break of between 2.0% and 15% according to ASTM D1004, and **in that** the security film has before application at least the following layers in the order stated:
a) a polymethacrylate film produced by an extrusion process;
comprising 90 to 100 wt% of a polymethacrylate, which comprises 90 to 100 wt% of MMA and 0 to 10 wt% of acrylates with an alkyl residue having 1 to 4 carbon atoms, which is additionally **characterized in that** the film comprises at most 10 wt% of an impact modifier, and that it has printing on at least one side,
b) a pressure-sensitive adhesive,
c) a release coating, and
d) a support layer.

7. Application-capable security film according to claim 6, **characterized in that** layer a) has a thickness without printing of between 20 and 75 µm, the printing has a thickness of between 1.5 and 3 µm, layer b) has a thickness of between 20 and 30 µm, layer c) has a thickness of between 0.5 and 1.2 µm, and layer d) has a thickness of between 20 and 70 µm.

8. Application-capable security film according to claim 6 or 7, **characterized in that** the film is transparent and comprises 90 to 100 wt% of polymethacrylate.

9. Application-capable security film according to at least one of claims 6 to 8, **characterized in that** the film does not contain any impact modifiers.

10. Use of the security films according to claim 6 or 9 for the manufacture of chip cards, documents, security labels, other labels, or price tags.

## Revendications

1. Utilisation de films de poly(méthacrylate de méthyle) en tant qu' étiquettes de sécurité, **caractérisée en ce que**
le film a été fabriqué au moyen d'un procédé d'extrusion;
présente une épaisseur comprise entre 20 et 75 µm et un allongement à la rupture compris entre 2,0 % et 15 % selon la norme ASTM D1004;
est composé à 90-100 % en poids d'un poly(méthacrylate de méthyle), lui-même composé à 90-100 % en poids de MMA et à 0-10 % en poids d'acrylates comportant un radical alkyle ayant 1 à 4 atomes de carbone; et
**en ce que** le film contient au maximum 10 % en poids ou pas du tout d'agents modifiant la résistance aux chocs.

2. Utilisation de films de poly(méthacrylate de méthyle) selon la revendication 1, **caractérisée en ce que** les films de poly(méthacrylate de méthyle) sont fabriqués au moyen d'un procédé qui se **caractérise par le fait qu'**il s'agit d'un procédé d'extrusion et que l'installation utilisée se compose au moins des composants suivants :
une extrudeuse,
une pompe à matière fondue,
une filtration optionnelle de la matière fondue,
un élément de mélange statique optionnel,
une buse à film plat,
un dispositif de lissage ou un rouleau refroidisseur,
et un enrouleur,
la buse à film plat disposant d'une lèvre de buse avec des éléments de réglage pour ajuster la largeur de la lèvre de buse, et les éléments de réglage présentant un écart de 11 à 15 mm les uns par rapport aux autres,
le corps de la buse présente une géométrie extérieure adaptée à la forme des rouleaux de lissage,
et la distance entre le bord de sortie de la masse fondue et la fente de lissage est de 80 mm ou moins.

3. Utilisation de films de poly(méthacrylate de méthyle) selon la revendication 2, **caractérisée en ce que** la buse à film plat est alignée par laser par rapport au dispositif de lissage et **en ce que** l'écart parallèle de la buse par rapport aux rouleaux de lissage, mesuré aux deux extrémités d'un côté extérieur de la buse, présente un écart maximal de 3 mm.

4. Utilisation de films de poly(méthacrylate de méthyle) e selon au moins l'une des revendications 1 à 3, **caractérisée en ce que** la différence entre le point le plus fin et le point le plus épais du film de poly(méthacrylate de méthyle) est au maximum de 5 µm.

5. Utilisation de films de poly(méthacrylate de méthyle) selon au moins l'une des revendications 2 à 4, **caractérisée en ce que** la buse et le rouleau présentent des surfaces chromées et **en ce que** ces surfaces chromées présentent une rugosité Ra inférieure à 0,08 µm.

6. Film de sécurité capable d'application, **caractérisé en ce que** le film de sécurité présente une épaisseur comprise entre 20 et 75 µm et un allongement à la rupture compris entre 2,0 % et 15 % selon la norme ASTM D1004, et **en ce que** le film de sécurité présente, avant l'application, au moins les couches suivantes dans l'ordre indiqué :
a) un film de poly(méthacrylate de méthyle), fabriqué au moyen d'un procédé d'extrusion; composé à 90-100 % en poids d'un poly(méthacrylate de méthyle), lui-même composé à 90-100 % en poids de MMA et à 0-10 % en poids d'acrylates comportant un radical alkyle présentant 1 à 4 atomes de carbone, **caractérisé en outre en ce que** le film contient au maximum 10 % en poids d'agents modifiant la résistance aux chocs, et **en ce qu'**il présente un imprimé sur au moins un côté,
b) un adhésif sensible à la pression,
c) un revêtement antiadhésif et
d) une couche support.

7. Film de sécurité capable d'application selon la revendication 6, **caractérisé en ce que** la couche a) a une épaisseur sans impression comprise entre 20 et 75 µm, l'imprimé a une épaisseur comprise entre 1,5 et 3 µm, la couche b) a une épaisseur comprise entre 20 et 30 µm, la couche c) a une épaisseur comprise entre 0,5 et 1,2 µm et la couche d) a une épaisseur comprise entre 20 et 70 µm.

8. Film de sécurité capable d'application selon la revendication 6 ou 7, **caractérisé en ce que** le film est transparent et composé à 90 à 100 % en poids de poly(méthacrylate de méthyle).

9. Film de sécurité capable de l'application selon au moins l'une des revendications 6 à 8, **caractérisé en ce que** le film ne contient pas d'agents modifiant la résistance aux chocs.

10. Utilisation des films de sécurité selon la revendication 6 ou 9 pour la fabrication de cartes à puce, de documents, d'étiquettes de sécurité, d'étiquettes de prix ou d'autres étiquettes.
